# EUROPEAN PATENT APPLICATION

(11) **EP 3 598 352 A1**
(43) Date of publication of application: **22.01.2020**
(21) Application number: 19184733.4
(22) Date of filing: 05.07.2019
(51) Int. Cl.: G06Q 10/02, G06Q 30/06

(54) **INFORMATION PROCESSING METHOD**

(30) Priority: 20.07.2018 JP 2018136920
(71) Applicant: Panasonic Intellectual Property Corporation of America, Torrance, CA 90503 (US)
(72) Inventor: MATSUI, Shuhei, Osaka, 540-6207 (JP); YONEDA, Takahiro, Osaka, 540-6207 (JP)
(74) Representative: Vigand, Philippe

(57) **Abstract**

An information processing method includes the following to be executed by a computer: obtaining (i) state information that indicates a state of an internal space of at least one moving body and is detected from a sensing result of the internal space and (ii) vacancy information about the at least one moving body; generating first presentation information pertaining to the state of at least one of a vacant moving body and vacant seats among the at least one moving body using the state information and the vacancy information; and causing a presentation apparatus to present the first presentation information.

## Description

### FIELD

The present disclosure relates to an information processing method concerning information about a moving body.

### BACKGROUND

A technique for providing a moving body to a user wishing to use the moving body is conventionally known (e.g. see Patent Literature (PTL) 1).

### CITATION LIST

### PATENT LITERATURE

PTL 1: Japanese Unexamined Patent Application Publication No. 2013-54537.

### SUMMARY

### TECHNICAL PROBLEM

With the conventional technique, the user wishing to use the moving body cannot know in what state an internal space of the moving body is before the moving body has been provided. For this reason, when the user is provided with a moving body having an internal state not to their liking (e.g. dirty seats, presence of odor), the user will have to use the moving body while being displeased. Depending on circumstances, the user may even cancel usage of the moving body.

Accordingly, the present disclosure aims to provide to an information processing method that enables the user wishing to use a moving body to acquire information relating to an internal state of the moving body before being supplied therewith.

### SOLUTION TO PROBLEM

An information processing method according to an aspect of the present disclosure includes the following to be executed by a computer: obtaining (i) state information that indicates a state of an internal space of at least one moving body and is detected from a sensing result of the internal space and (ii) vacancy information about the at least one moving body; generating first presentation information pertaining to the state of at least one of a vacant moving body and vacant seats among the at least one moving body using the state information and the vacancy information; and causing a presentation apparatus to present the first presentation information.

### ADVANTAGEOUS EFFECT

An information processing method according to an aspect of the present disclosure enables a user wishing to use a moving body to acquire information relating to an internal state of the moving body before being supplied therewith.

### BRIEF DESCRIPTION OF DRAWINGS

FIG. 1 is a block diagram showing a configuration of an information presentation system according to an embodiment.
FIG. 2 is a data structure diagram showing an example of moving body information according to the embodiment.
FIG. 3 is a data structure diagram showing an example of record information according to the embodiment.
FIG. 4 is a data structure diagram showing an example of attribute information according to the embodiment.
FIG. 5 is a sequence diagram of a moving body internal state obtainment process according to the embodiment.
FIG. 6 is a flowchart of a moving body internal state analysis process according to the embodiment.
FIG. 7 is a flowchart of a seat dirt degree determination process according to the embodiment.
FIG. 8 is a sequence diagram of a usage tendency obtainment process according to the embodiment.
FIG. 9 is a flowchart of a usage tendency analysis process according to the embodiment.
FIG. 10 is a sequence diagram of a reservation tendency obtainment process according to the embodiment.
FIG. 11 is a flowchart of a reservation tendency analysis process according to the embodiment.
FIG. 12 is a schematic view showing an example of a level histogram according to the embodiment.
FIG. 13 is a sequence diagram of a first tolerance obtainment process according to the embodiment.
FIG. 14 is a sequence diagram of a second tolerance obtainment process according to the embodiment.
FIG. 15 is a flowchart of a tolerance analysis process according to the embodiment.
FIG. 16 is a sequence diagram of a presentation process according to the embodiment.
FIG. 17 is a flowchart of a presentation information generation process according to the embodiment.
FIG. 18A is a schematic view showing an example of first presentation information being presented according to the embodiment.
FIG. 18B is a schematic view showing an example of the first presentation information being presented according to the embodiment.
FIG. 19A is a schematic view showing an example of the first presentation information being presented according to the embodiment.
FIG. 19B is a schematic view showing an example of the first presentation information being presented according to the embodiment.
FIG. 20A is a schematic view showing an example of the first presentation information being presented according to the embodiment.
FIG. 20B is a schematic view showing an example of the first presentation information being presented according to the embodiment.
FIG. 21A is a schematic view showing an example of the first presentation information being presented according to the embodiment.
FIG. 21B is a schematic view showing an example of the first presentation information being presented according to the embodiment.
FIG. 22A is a schematic view showing an example of the first presentation information being presented according to the embodiment.
FIG. 22B is a schematic view showing an example of the first presentation information being presented according to the embodiment.
FIG. 23A is a schematic view showing an example of a presentation method of a target seat.
FIG. 23B is a schematic view showing an example of a presentation method of the target seat.
FIG. 23C is a schematic view showing an example of a presentation method of the target seat.
FIG. 23D is a schematic view showing an example of a presentation method of the target seats.
FIG. 24 is a block diagram showing a configuration of an information presentation system according to another embodiment.
FIG. 25A is a schematic view showing an example of the first presentation information being presented according to the other embodiment.
FIG. 25B is a schematic view showing an example of second presentation information being presented according to the other embodiment.
FIG. 26A is a schematic view showing an example of a gain or loss being presented according to the other embodiment.
FIG. 26B is a schematic view showing an example of the gain or the loss being presented according to the other embodiment.

### DESCRIPTION OF EMBODIMENTS

### CIRCUMSTANCES LEADING UP TO ASPECT OF PRESENT DISCLOSURE

In recent years, ridesharing services for automated moving bodies have been studied.

It generally tends to be difficult to take care of an internal space of automated moving bodies without a driver present compared to moving bodies with a driver present. When providing a user with an automated moving body, there is therefore a high risk of providing a moving body with an internal space that is not to the liking of the user compared to when providing a moving body with a driver present. When providing the user with a moving body that is not to the liking thereof, the user will have to use the moving body while being displeased. Accordingly, the user may get a bad impression of an operator of the ridesharing service. Depending on circumstances, the user may even cancel usage of the moving body. In such a case, the operator of the ridesharing service will lose business opportunities.

The inventors, keeping in mind this type of problem, have conceived an information processing method according to an aspect of the present disclosure that enables a user wishing to use a moving body to acquire information relating to the internal space of the moving body.

An information processing method according to an aspect of the present disclosure includes the following to be executed by a computer: obtaining (i) state information that indicates a state of an internal space of at least one moving body and is detected from a sensing result of the internal space and (ii) vacancy information about the at least one moving body; generating first presentation information pertaining to the state of at least one of a vacant moving body and vacant seats among the at least one moving body using the state information and the vacancy information; and causing a presentation apparatus to present the first presentation information.

Using the above information processing method, information relating to the state of the internal space of the moving body and concerning at least one of the moving body and seats of the moving body is presented on a presentation apparatus. Accordingly, a user wishing to use the moving body can acquire the information relating to the internal state of the moving body to be presented on the presentation apparatus before being provided with the moving body. The present disclosure can present information relating to the internal space of a moving body that can be used by the user, which was difficult to achieve with conventional techniques.

The method may also include obtaining attribute information that indicates a user attribute concerning an internal space of a moving body; and generating the first presentation information that corresponds to a relationship between the state and the user attribute and indicates the state of the at least one of the vacant moving body and the vacant seats, further using the attribute information. This makes it possible to more easily allow the user to identify a moving body or seat in a state suited to the user attribute. Since the information to be presented is the moving body or seat in a state suited to the user attribute, the amount of presentation information is reduced, and memory capacity necessary for the presenting or the throughput of a processor can also be reduced.

The method may also include determining whether it is possible to make at least one reservation for the at least one of the vacant moving body and the vacant seats in accordance with the relationship between the state and the user attribute; and generating the first presentation information that indicates whether each of the at least one reservation can be made. This makes it possible to efficiently reserve a moving body or seat in a state suited to the user attribute.

The method may also include determining at least one degree of the state, to be presented, of the at least one of the vacant moving body and the vacant seats in accordance with the relationship between the state and the user attribute; and generating the first presentation information that indicates each of the at least one degree of the state, to be presented, determined. This makes it possible to more easily allow the user to more accurately identify a moving body or seat in a state suited to the user attribute.

The user attribute may include a user tolerance toward the state, and the method may include mitigating the at least one degree of the state, to be presented, as the user tolerance toward the state is higher. This makes it possible to present to the user a moving body or seat in a state that can be accepted thereby.

The method may also include determining at least one price, to be presented, pertaining to a usage of the at least one of the vacant moving body and the vacant seats in accordance with the relationship between the state and the user attribute; and generating the first presentation information that indicates each of the at least one price, to be presented, determined. This makes it possible to present to the user a moving body or seat in a state that balances suitability with respect to the user attribute and price.

The user attribute may include the user tolerance toward the state, and the method may include reducing the at least one price, to be presented, as the user tolerance toward the state is higher. This makes it possible to present to the user a moving body or seat in a state that balances a state that can be accepted by the user and price.

The method may include determining at least one recommendation degree to a user of the at least one of the vacant moving body and the vacant seats in accordance with the relationship between the state and the user attribute; and generating the first presentation information that indicates each of the at least one recommendation degree determined. This makes it possible to allow the user to identify a moving body or seat suited to the user without the need to check the specifics of the state of the moving body or seat that can be used by the user.

The method may include causing the presentation apparatus to present the first presentation information for each of the vacant seats. This makes it possible to adopt ridesharing per seat unit.

The method may include generating the attribute information from a usage history of the at least one moving body by the user. This makes it possible to obtain the user attribute based on usage conditions of an actual moving body.

The method may include generating the attribute information from the state of the at least one moving body before and after usage by the user. This makes it possible to more accurately obtain the user attribute.

The method may include determining a gain or a loss for the user based on the state of the at least one moving body before and after usage by the user; and causing the presentation apparatus to present the gain or the loss determined. This makes it possible to limit bias of the usage degree of a moving body caused by the state thereof.

The method may include obtaining the attribute information that indicates the user attribute concerning the internal space of the moving body; generating second presentation information for determining whether the at least one of the vacant moving body and the vacant seats can be reserved in accordance with the relationship between the state and the user attribute further using the attribute information; and causing the presentation apparatus to present the second presentation information. This enables a service provider, which provides a service using the moving body, to determine whether the user can make a reservation in accordance with the state of the moving body and the user attribute. In other words, the service provider can match the moving body and the user more thoroughly.

The method may include causing the presentation apparatus to present the first presentation information in which a determination result determined by presenting the second presentation information is reflected. This enables the service provider to manage the first presentation information to be presented to the user.

The second presentation information may be the state information. This enables the service provider to provide more accurate information for determining which moving body and to match to which user.

The state may be a state of dirt on or damage to seats of the at least one moving body, or an odor in the internal space of the at least one moving body. This makes it possible to allow the user to understand the state that is emphasized concerning the usage of the moving body, and to limit leaving a bad impression on the user, cancellations, or the like.

Hereinafter, a specific example of an information processing method according to an aspect of the present disclosure will be described with reference to the drawings. The subsequent embodiments show a specific example in the present disclosure. Therefore, numerical values, shapes, components, placement and connection of the components, steps (processes) and order of steps, and the like are mere examples and are not intended to limit the present disclosure. Components according to the following embodiments not mentioned in any of the independent claims are described as optional additional components. Moreover, the drawings are schematic diagrams and do not necessarily provide strictly accurate illustrations.

Note that this comprehensive or concrete aspect of the present disclosure may be realized on a device, integrated circuit, computer program, or a recording medium such as a computer-readable CD-ROM, and may also be realized by optionally combining devices, integrated circuits, computer programs, and recording media.

### EMBODIMENT

Hereinafter, a system that presents information according to an embodiment will be described. This information presentation system provides a user wishing to use a moving body with information pertaining to a state of an internal space of the usable moving body.

The moving body is described as an example of an automated vehicle used in a ridesharing service, but as long as the user can board the moving body, the moving body is not necessarily limited to the automated vehicle used in the ridesharing service. The moving body which the user can board is, for example, a taxi with a driver present, bus, express train with reserved seats, and the like. The moving body may or may not have a driver or seats.

### 1. Configuration of Information Presentation System

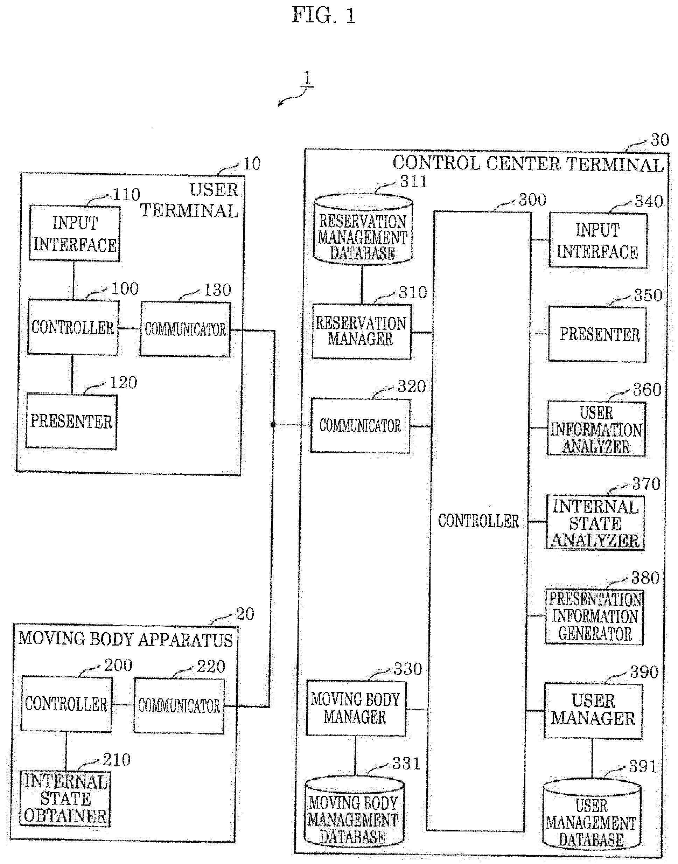

FIG. 1 is a block diagram showing a configuration of information presentation system 1 according to the embodiment.

As illustrated in FIG. 1, information presentation system 1 includes user terminal 10, moving body apparatus 20, and control center terminal 30.

User terminal 10 is, for example, used by a user of information presentation system 1. In FIG. 1, user terminal 10 is depicted as a single unit, but the number of user terminals 10 is not necessarily limited thereto and may be any number.

User terminal 10 includes controller 100, input interface 110, presenter 120, and communicator 130. User terminal 10 may be, for example, a smartphone and may also be a tablet terminal.

Input interface 110 receives an input from the user that uses user terminal 10. Input interface 110 includes, for example, a touchpad, and may receive an input through a touch operation by the user that uses user terminal 10. Input interface 110 includes, for example, input keys, and may also receive an input through a key operation by the user that uses user terminal 10. Input interface 110 includes, for example, a microphone, and may also receive an input through speech by the user that uses user terminal 10.

Presenter 120 presents information to the user that uses user terminal 10. Presenter 120 includes, for example, a liquid-crystal display (LCD), and may present information by displaying an image to the user that uses user terminal 10. Presenter 120 includes, for example, a speaker, and may present information by outputting speech to the user that uses user terminal 10.

Communicator 130 communicates with other communicable devices. The other devices include moving body apparatus 20 and control center terminal 30. Communicator 130 includes, for example, a wireless communicator, and may wirelessly communicate with the other devices.

Controller 100 controls input interface 110, presenter 120, and communicator 130. Controller 100 may, for example, be realized by dedicated hardware. User terminal 10 includes, for example, a processor and memory, and may be realized by the processor executing a program stored in the memory.

Moving body apparatus 20 is, for example, installed in the moving body. In FIG. 1, moving body apparatus 20 is depicted as a single unit, but the number of moving body apparatuses 20 is not necessarily limited thereto and may be any number.

Moving body apparatus 20 includes controller 200, internal state obtainer 210, and communicator 220.

Internal state obtainer 210 senses an internal space of the moving body installed in moving body apparatus 20, and outputs state information that indicates a state of the internal space of the moving body and is detected from a sensing result. Internal state obtainer 210 includes, for example, an imaging apparatus such as a digital video camera or digital still camera, may capture an image of the internal space of the moving body (e.g. seats), and output the captured image as the state information. In this case, the imaging apparatus may, for example, capture the image using visible light and output the visible light image as the state information; and may also capture an image using infrared light and output the infrared light image as the state information. The imaging apparatus may also capture a range image using visible light or infrared light and output the range image as the state information. Internal state obtainer 210 may, for example, include an odor sensor, sense an odor in an interior of the moving body, and output information that indicates the sensed odor as the state information. Internal state obtainer 210 may include a directional microphone, convert the speech of the interior of the moving body to a speech signal that is an electric signal, and output the converted speech signal as the state information.

Communicator 220 communicates with the other communicable devices. The other devices include moving body apparatus 10 and control center terminal 30. Communicator 220 includes, for example, a wireless communicator, and may wirelessly communicate with the other devices.

Controller 200 controls internal state obtainer 210 and communicator 220. Controller 200 may, for example, be realized by dedicated hardware. Moving body apparatus 20 includes, for example, a processor and memory, and may be realized by the processor executing a program stored in the memory.

Control center terminal 30 is, for example, used by an operator that operates information presentation system 1.

Control center terminal 30 includes controller 300, reservation manager 310, reservation management database 311, communicator 320, moving body manager 330, moving body management database 331, input interface 340, presenter 350, user information analyzer 360, internal state analyzer 370, presentation information generator 380, user manager 390, and user management database 391. Control center terminal 30 may be, for example, a computer.

Moving body management database 331 stores state information obtained from moving body apparatus 20, moving body information that indicates a state of the interior of the moving body generated based on the state information, and vacancy information that indicates a vacant moving body and seats of the moving body. Moving body management database 331 may be realized, for example, by a hard disk in control center terminal 30, a removable digital versatile disc (DVD) in control center terminal 30, a memory contained in control center terminal 30, and a removable USB memory in control center terminal 30.

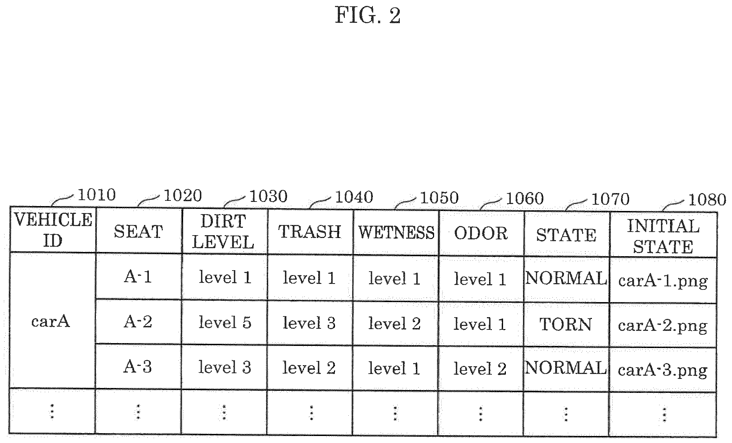

FIG. 2 is a data structure diagram showing an example of the moving body information stored in moving body management database 331.

As illustrated in FIG. 2, the moving body information corresponds to vehicle ID 1010, seat 1020, dirt level 1030, trash 1040, wetness 1050, odor 1060, state 1070, and initial state 1080.

Vehicle ID 1010 is information that identifies a vehicle that is an example of the moving body. Seat 1020 is information that indicates a seat included in the vehicle identified by the corresponding vehicle ID 1010. Dirt level 1030 is information that indicates a degree of dirt on the corresponding seat. Dirt level 1030 is expressed with six degrees level 1 to level 6 that indicate a higher level of dirt as the number is higher. Trash 1040 is information that indicates a degree of trash on the corresponding seat. Trash 1040 is expressed with six degrees level 1 to level 6 that indicate a higher level of trash as the number is higher. Wetness 1050 is information that indicates a degree of wetness of the corresponding seat. Wetness 1050 is expressed with six degrees level 1 to level 6 that indicate a higher level of wetness as the number is higher. Odor 1060 is information that indicates a degree of odor of the corresponding seat. Odor 1060 is expressed with six degrees level 1 to level 6 that indicate a stronger odor as the number is higher. State 1070 is information that indicates the state of the corresponding seat. State 1070 is information that indicates either one of the seat being in a normal state or the seat being torn. Initial state 1080 is an image of the initial state of the corresponding seat. The initial state refers to a possible seat without any trash, wet stains or tears.

Returning to FIG. 1, information presentation system 1 will be further described.

Moving body manager 330 updates and manages moving body management database 331. Moving body manager 330 may, for example, be realized by dedicated hardware. Control center terminal 30 includes, for example, a processor and memory, and may be realized by the processor executing a program stored in the memory.

Reservation management database 311 stores record information including reservation information of the moving body and a usage record of the user. Reservation management database 311 may be realized, for example, by a hard disk in control center terminal 30, a removable DVD in control center terminal 30, a memory contained in control center terminal 30, and a removable USB memory in control center terminal 30.

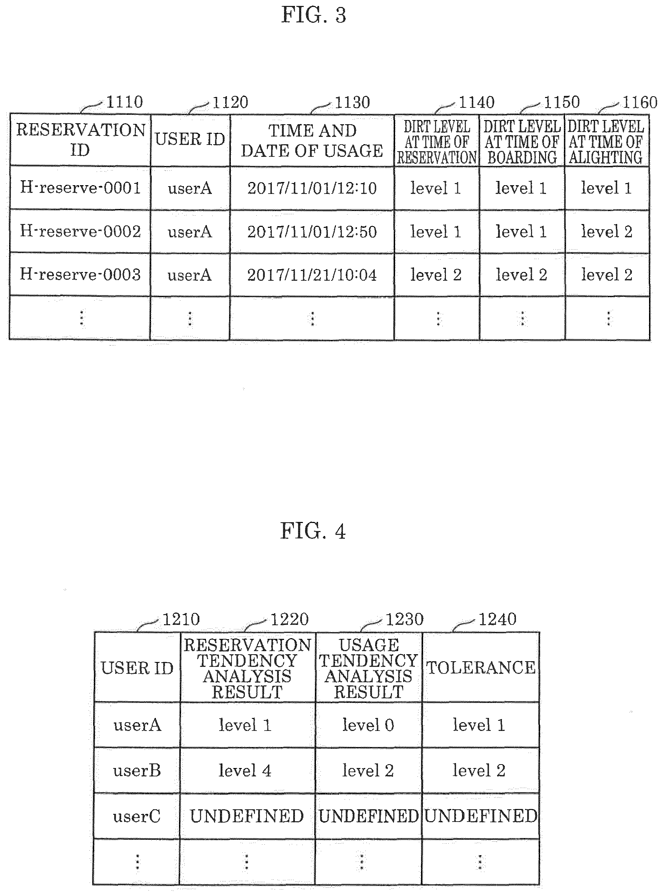

FIG. 3 is a data structure diagram showing an example of the record information stored in reservation management database 311.

As illustrated in FIG. 3, the record information corresponds to, for example, reservation ID 1110, user ID 1120, time and date of usage 1130, dirt level at time of reservation 1140, dirt level at time of boarding 1150, and dirt level at time of alighting 1160.

Reservation ID 1110 is information that identifies a reservation for usage of the moving body. User ID 1120 is information that identifies a user that has made a reservation that is identified with a corresponding reservation ID. Time and date of usage 1130 is information that indicates a time and date when the reservation, which is identified with the corresponding reservation ID, is made. Dirt level at time of reservation 1140 is information that indicates a level of dirt of seats that can be reserved at the moment the reservation, which is identified with the corresponding reservation ID, is made. Dirt level at time of reservation 1140 is expressed with six degrees level 1 to level 6 that indicate a higher level of dirt as the number is higher, similar to dirt level 1030. Dirt level at time of boarding 1150 is information that indicates a level of dirt of seats that can be reserved at the moment the user, which is identified with a corresponding user ID, boards the moving body that includes the seats that can be reserved of the reservation, which is identified with the corresponding reservation ID. Dirt level at time of boarding 1150 is expressed with six degrees level 1 to level 6 that indicate a higher level of dirt as the number is higher, similar to dirt level 1030. Dirt level at time of alighting 1160 is information that indicates a level of dirt of seats that can be reserved at the moment the user, which is identified with the corresponding user ID, alights from the moving body that includes the seats that can be reserved of the reservation, which is identified with the corresponding reservation ID. Dirt level at time of alighting 1160 is expressed with six degrees level 1 to level 6 that indicate a higher level of dirt as the number is higher, similar to dirt level 1030. Note that reservation tendency analysis result 1220, usage tendency analysis result 1230, and tolerance 1240 are not limited to ascending (or descending) numerical values that indicate the level of dirt, and may also be indices that can distinguish the different degrees of dirt. These may be determined from one usage or collectively determined from multiple usages.

Returning to FIG. 1, information presentation system 1 will be further described.

Reservation manager 310 updates and manages reservation management database 311. Reservation manager 310 may, for example, be realized by dedicated hardware. Control center terminal 30 includes, for example, a processor and memory, and may be realized by the processor executing a program stored in the memory.

User management database 391 stores attribute information that indicates a user attribute concerning the internal space of the moving body. User management database 391 may be realized, for example, by a hard disk in control center terminal 30, a removable DVD in control center terminal 30, a memory contained in control center terminal 30, and a removable USB memory in control center terminal 30.

FIG. 4 is a data structure diagram showing an example of the attribute information stored in user management database 391.

As illustrated in FIG. 4, the attribute information corresponds to, for example, user ID 1210, reservation tendency analysis result 1220, usage tendency analysis result 1230, and tolerance 1240.

User ID 1210 is information that identifies a user. Reservation tendency analysis result 1220 is information that indicates a tendency for a level of dirt of a seat reserved by a corresponding user ID 1210. Reservation tendency analysis result 1220 is expressed with six degrees level 1 to level 6 that indicate a higher level of dirt as the number is higher, similar to dirt level 1030, or is expressed as "undefined" which indicates that the tendency cannot be identified. Usage tendency analysis result 1230 is information that indicates a tendency for a change in dirt level at the time of boarding and alighting of the seat used by the corresponding user ID 1210. Usage tendency analysis result 1230 is expressed with eleven degrees level -5 to level 5 that indicate a higher level of dirt as the number is higher, or is expressed as "undefined" which indicates that the tendency cannot be identified. Tolerance 1240 is information that indicates a tolerance of the corresponding user ID 1210 toward the state of the internal space of the moving body. Tolerance 1240 is expressed with six degrees level 1 to level 6 that indicate a higher tolerance as the number is higher.

Returning to FIG. 1, information presentation system 1 will be further described.

User manager 390 updates and manages user management database 391. User manager 390 may, for example, be realized by dedicated hardware. Control center terminal 30 includes, for example, a processor and memory, and may be realized by the processor executing a program stored in the memory.

Input interface 340 receives an input from the user that uses control center terminal 30. Input interface 340 includes, for example, a touchpad, and may receive an input through a touch operation by the user that uses control center terminal 30. Input interface 340 includes, for example, input keys, and may also receive an input through a key operation by the user that uses control center terminal 30. Input interface 340 includes, for example, a microphone, and may also receive an input through speech by the user that uses control center terminal 30.

Presenter 350 presents information to the user that uses control center terminal 30. Presenter 350 includes, for example, an LCD, and may present information by displaying an image to the user that uses control center terminal 30. Presenter 350 includes, for example, a speaker, and may present information by outputting speech to the user that uses control center terminal 30.

Communicator 320 communicates with other communicable devices. The other devices include user terminal 10 and moving body apparatus 20. Communicator 320 includes, for example, a wireless communicator, and may wirelessly communicate with the other devices.

User information analyzer 360 performs processes with regard to information about the user that uses information presentation system 1. More specifically, user information analyzer 360 performs a usage tendency analysis process during which a usage tendency of the moving body by the user is analyzed from a usage history of the moving body by the user, a reservation tendency analysis process during which a reservation tendency of the moving body by the user is analyzed from a reservation history of the moving body by the user, and a tolerance analysis process during which a user tolerance toward the internal space of the moving body is analyzed from the usage history of the moving body by the user. The reservation tendency analysis process, the usage tendency analysis process, and the tolerance analysis process will be described more in detail later with reference to the drawings. User information analyzer 360 may, for example, be realized by dedicated hardware. Control center terminal 30 includes, for example, a processor and memory, and may be realized by the processor executing a program stored in the memory.

Internal state analyzer 370 performs a process with regard to information about the state of the internal space of the moving body. More specifically, internal state analyzer 370 performs a moving body internal state analysis process during which the state of the internal space of the moving body is analyzed. The moving body internal state analysis process will be described in more detail later with reference to the drawings. Internal state analyzer 370 may, for example, be realized by dedicated hardware. Control center terminal 30 includes, for example, a processor and memory, and may be realized by the processor executing a program stored in the memory.

Presentation information generator 380 performs a process during which presentation information to be presented on the presentation apparatus is generated. Presentation information generator 380 causes the presentation apparatus to present the generated presentation information. More specifically, presentation information generator 380 performs a presentation information generation process during which first presentation information pertaining to the state of the internal space of the moving body, i.e., at least one of a vacant moving body and vacant seats, is generated using the state information and the vacancy information. The presentation information generation process will be described in more detail later with reference to the drawings. A specific example of the first presentation information to be presented on the presentation apparatus will also be described in more detail later with reference to the drawings. The presentation apparatus may be, for example, user terminal 10 including presenter 120, and may also be control center terminal 30 including presenter 350. Presentation information generator 380 may, for example, be realized by dedicated hardware. Control center terminal 30 includes, for example, a processor and memory, and may be realized by the processor executing a program stored in the memory.

Controller 300 controls reservation manager 310, communicator 320, moving body manager 330, input interface 340, presenter 350, user information analyzer 360, internal state analyzer 370, presentation information generator 380, and user manager 390. Controller 300 may, for example, be realized by dedicated hardware. Control center terminal 30 includes, for example, a processor and memory, and may be realized by the processor executing a program stored in the memory.

Hereinafter, processes performed by information presentation system 1 will be described.

### 2. Operation of Information Presentation System

Information presentation system 1 performs a moving body internal state obtainment process, a usage tendency obtainment process, a reservation tendency obtainment process, a first tolerance obtainment process, a second tolerance obtainment process, and a presentation process. Hereinafter, these processes will be described in order with reference to the drawings.

The moving body internal state obtainment process will first be described.

During the moving body internal state obtainment process, the state information is obtained from the moving body and the moving body information stored in moving body management database 331 is updated based on the obtained state information.

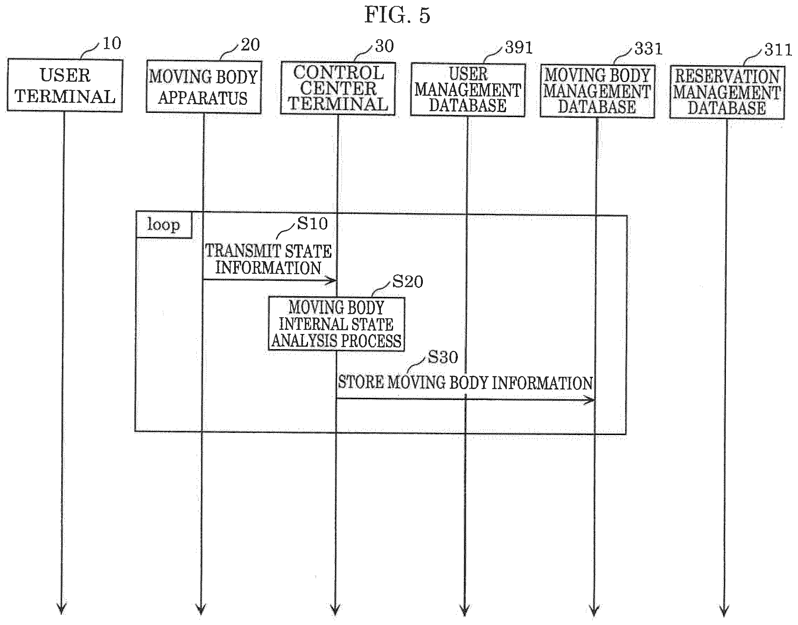

FIG. 5 is a sequence diagram of the moving body internal state obtainment process.

The moving body internal state obtainment process is performed repeatedly as needed during operation of information presentation system 1. The moving body internal state obtainment process may be executed repeatedly for, for example, every predetermined period T1 (e.g. one minute).

Upon starting the moving body internal state obtainment process, each moving body apparatus 20 included in information presentation system 1 senses the internal space of the moving body in which moving body apparatus 20 is installed, and transmits the state information, which indicates the state of the internal space of the moving body and is detected from the sensing result, to control center terminal 30 (step S10). The state information may be, for example, a captured image of the seat in the moving body, information that indicates an odor sensed in the interior of the moving body, and a speech signal that is speech collected in the interior of the moving body and converted to an electrical signal. An example of the state information being a captured image of a seat in the moving body will be described. The image may be, for example, a visible light image captured with visible light, an infrared light image captured with infrared light, and a range image captured using visible light or infrared light.

Upon transmitting the state information from moving body apparatus 20, internal state analyzer 370 starts the moving body internal state analysis process (step S20).

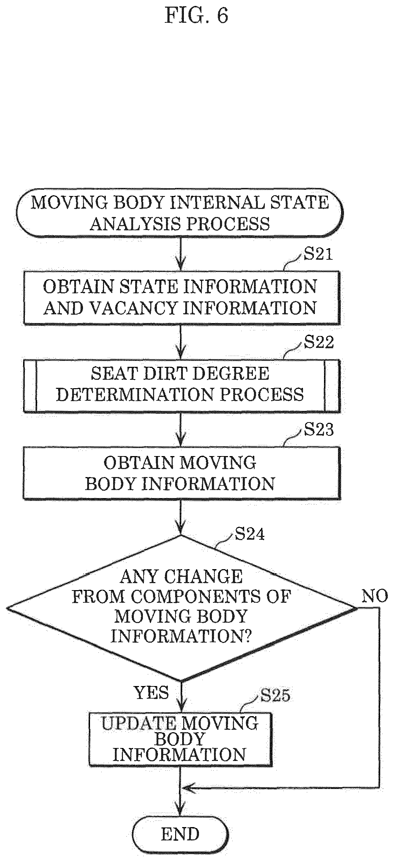

FIG. 6 is a flowchart of the moving body internal state analysis process.

Upon starting the moving body internal state analysis process, internal state analyzer 370 obtains the state information transmitted from moving body apparatus 20 and obtains the vacancy information stored in moving body management database 331 (step S21). Internal state analyzer 370 then stores the obtained state information in moving body management database 331.

Upon obtaining the state information and the vacancy information, internal state analyzer 370 starts a seat dirt degree determination process.

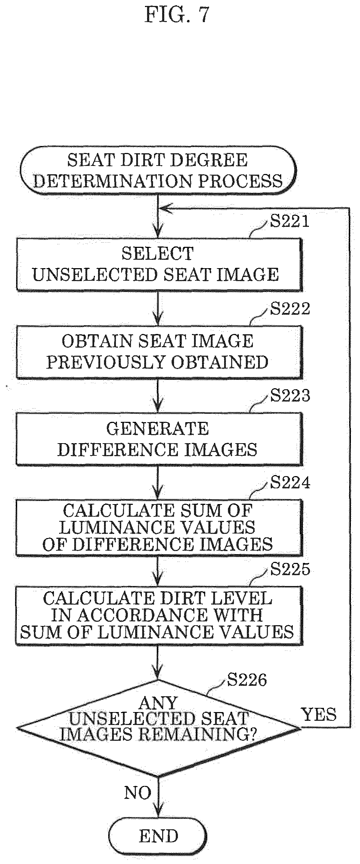

FIG. 7 is a flowchart of the seat dirt degree determination process.

Upon starting the seat dirt degree determination process, internal state analyzer 370 identifies captured seat images of vacant seats and selects one unselected seat image from the identified seat images (step S221).

Upon selecting an unselected seat image, internal state analyzer 370 obtains a previously obtained seat image that is the same seat as the selected seat image (hereinafter referred to as "previous seat image") from moving body management database 331 (step S222).

Internal state analyzer 370 next generates difference images of the selected seat image and the obtained previous seat image (step S223), and calculates a sum of luminance values of the difference images (step S224). Internal state analyzer 370 then calculates a dirt level of the corresponding seat in accordance with the calculated sum (step S225). The dirt level is, for example, expressed with one of six degrees level 1 to level 6 that indicate a higher level of dirt as the number is higher in accordance with a predetermined standard.

Upon calculating the dirt level, internal state analyzer 370 checks whether there are any unselected seat images remaining among the seat images identified during the process of step S221 (step S226).

When there are unselected seat images remaining during the process of step S226 (step S226: YES), internal state analyzer 370 returns to the process of step S221 and performs the processes from step S221.

When there are no unselected seat images remaining during the process of step S226 (step S226: NO), internal state analyzer 370 ends the seat dirt degree determination process.

Returning to FIG. 6, the moving body internal state analysis process will be further described.

Upon ending the seat dirt degree determination process (step S22), internal state analyzer 370 obtains the moving body information stored in moving body management database 331 (step S23).

Upon obtaining the moving body information, internal state analyzer 370 checks whether there is any change from components of the obtained moving body information in the dirt level calculated during the seat dirt degree determination process (step S24).

When the dirt level has changed from the components of the moving body information during the process of step S24 (step S24: YES), internal state analyzer 370 updates the moving body information in this dirt level (step S25).

When the dirt level has not changed from the components of the moving body information during the process of step S24 (step S24: NO), internal state analyzer 370 ends this moving body internal state analysis process.

Returning to FIG. 5, the moving body internal state obtainment process will be further described.

Upon ending the moving body internal state analysis process (step S20), control center terminal 30 stores the updated moving body information in moving body management database 331 (step S30). When the moving body information is not updated during the process of step S20, the process of step S30 is not performed.

When the process of step S30 is ended and the moving body information is not updated during the process of step S20, information presentation system 1 ends the moving body internal state obtainment process.

The usage tendency obtainment process will be described next.

During the usage tendency obtainment process, when the user has used the moving body, the state information of the moving body before the user has boarded and after the user has alighted is obtained, and the attribute information stored in user management database 391 is updated based on the obtained state information.

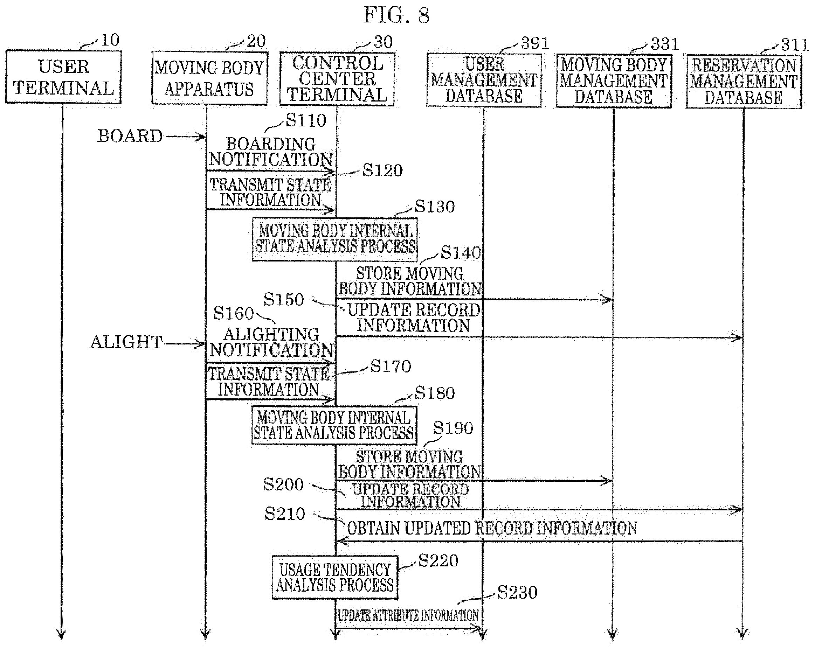

FIG. 8 is a sequence diagram of the usage tendency obtainment process.

The usage tendency obtainment process starts when the user boards the moving body.

Upon starting the usage tendency obtainment process, moving body apparatus 20, which is installed in the moving body that the user boards, transmits a boarding notification that the user has boarded the moving body to control center terminal 30 (step S110). Moving body apparatus 20 then transmits the state information about the seat that the user is going to use (an example will be described here in which the state information is an image captured of the seat) and is detected from the sensing result sensed immediately before the user boards the moving body to control center terminal 30 (step S120).

Upon transmitting the boarding notification and the state information from moving body apparatus 20, internal state analyzer 370 performs the moving body internal state analysis process (see FIG. 6) (step S130).

Upon ending the moving body internal state analysis process of step S130, internal state analyzer 370 stores the moving body information updated during the process of step S130 in moving body management database 331 (step S140). When the moving body information is not updated during the process of step S130, the process of step S140 is not performed.

Internal state analyzer 370 next updates the record information stored in reservation management database 311 by updating dirt level at time of boarding 1150 with the dirt level of the seat used by the user calculated during the moving body internal state analysis process of step S130 (step S150).

Subsequently, when the user alights from the moving body, moving body apparatus 20 installed in this moving body transmits an alighting notification that the user has alighting from the moving body to control center terminal 30 (step S160). Moving body apparatus 20 then transmits the state information about the seat that the user has used (the image captured of the seat) and is detected from the sensing result sensed immediately after the user has alighted from the moving body to control center terminal 30 (step S170).

Upon transmitting the alighting notification and the state information from moving body apparatus 20, internal state analyzer 370 performs the moving body internal state analysis process (see FIG. 6) (step S180).

Upon ending the moving body internal state analysis process of step S180, internal state analyzer 370 stores the moving body information updated during the process of step S180 in moving body management database 331 (step S190). When the moving body information is not updated during the process of step S180, the process of step S190 is not performed.

Internal state analyzer 370 next updates the record information stored in reservation management database 311 by updating dirt level at time of alighting 1160 with the dirt level of the seat used by the user calculated during the moving body internal state analysis process of step S180 (step S200).

Upon updating the record information, user information analyzer 360 obtains the updated record information from reservation management database 311 (step S210).

Upon obtaining the updated record information, user information analyzer 360 starts the usage tendency analysis process (step S220).

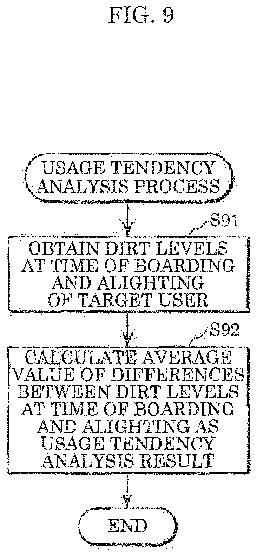

FIG. 9 is a flowchart of the usage tendency analysis process.

Upon starting the usage tendency analysis process, user information analyzer 360 obtains dirt level at time of boarding 1150 and dirt level at time of alighting 1160, which correspond to user ID 1120 identifying the user that boarded the moving body, from the obtained record information (step S91).

User information analyzer 360 next calculates an average value of differences between the obtained dirt level at time of boarding 1150 and dirt level at time of alighting 1160, which correspond to the same reservation ID 1110, as a usage tendency analysis result (step S92).

Upon ending the process of step S92, user information analyzer 360 ends the usage tendency analysis process.

Returning to FIG. 8, the usage tendency analysis process will be described further.

Upon ending the usage tendency analysis process (step S220), user information analyzer 360 updates the attribute information stored in user management database 391 by updating usage tendency analysis result 1230 with the usage tendency analysis result calculated during the process of step S220 (step S230).

Upon ending the process of step S230, information presentation system 1 ends the usage tendency obtainment process. Note that the usage tendency analysis may be performed at an optional time.

The reservation tendency obtainment process will be described next.

During the reservation tendency obtainment process, the attribute information stored in user management database 391 is updated based on the record information stored in reservation management database 311.

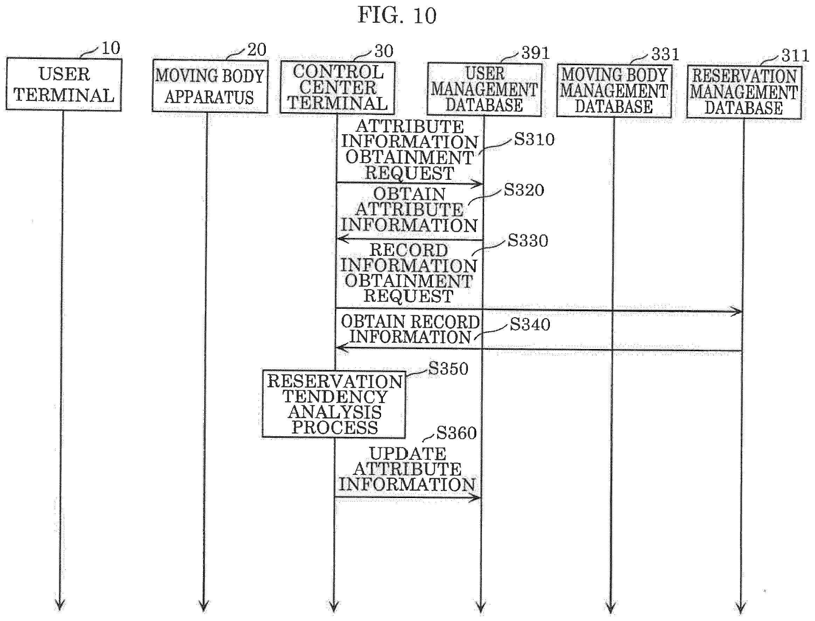

FIG. 10 is a sequence diagram of the reservation tendency obtainment process.

The reservation tendency obtainment process is performed repeatedly as needed during the operation of information presentation system 1. The moving body internal state obtainment process may, for example, be executed repeatedly every day at a specific time after business hours of the servicer that provides the moving body (e.g. 3 a.m.).

Upon starting the reservation tendency obtainment process, user information analyzer 360 outputs an attribute information obtainment request to user management database 391 (step S310), and obtains the attribute information stored in user management database 391 (step S320). User information analyzer 360 outputs a record information obtainment request to reservation management database 311 (step S330), and obtains the record information stored in reservation management database 311 (step S340).

Upon obtaining the attribute information and the record information, user information analyzer 360 starts the reservation tendency analysis process (step S350).

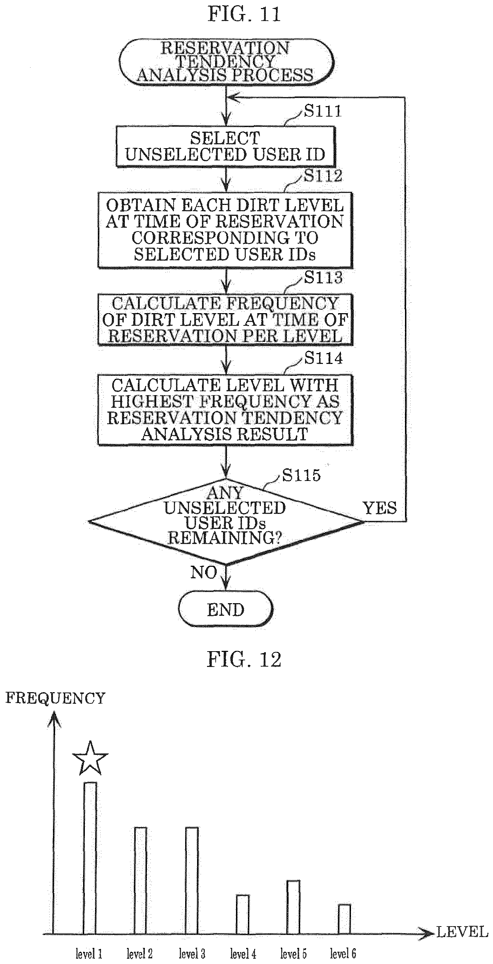

FIG. 11 is a flowchart of the reservation tendency analysis process.

Upon starting the reservation tendency analysis process, user information analyzer 360 selects an unselected user ID from user ID 1210 including the obtained attribute information (step Sill).

Upon selecting the unselected user ID, user information analyzer 360 obtains each dirt level at time of reservation 1140 corresponding to selected user IDs in the obtained record information (step S112). The updating of dirt level at time of reservation 1140 in the record information will be described later when the presentation process is described.

Upon obtaining dirt level at time of reservation 1140, user information analyzer 360 calculates a frequency of dirt level at time of reservation 1140 per level (step S113), and calculates the level with the highest frequency as a reservation tendency analysis result (step S114).

FIG. 12 is a schematic view showing an example of a level histogram according of dirt level at time of reservation 1140 obtained by user information analyzer 360.

In the example shown in FIG. 12, user information analyzer 360 has calculated level 1 with the highest frequency as the reservation tendency analysis result.

Returning to FIG. 11, the usage tendency analysis process will be described further.

Upon calculating the reservation tendency analysis result, user information analyzer 360 checks whether there are any unselected user IDs remaining among user ID 1210 including the obtained attribute information (step S115).

When there are unselected user IDs remaining during the process of step S115 (step S115: YES), user information analyzer 360 returns to the process of step Sill and performs the processes from step Sill.

When there are no unselected user IDs remaining during the process of step S115 (step S115: NO), user information analyzer 360 ends the reservation tendency analysis process.

Returning to FIG. 10, the reservation tendency analysis process will be described further.

Upon ending the reservation tendency analysis process (step S350), user information analyzer 360 updates the attribute information stored in user management database 391 by updating reservation tendency analysis result 1220 with the reservation tendency analysis result calculated during the process of step S350 (step S360).

Upon ending the process of step S360, information presentation system 1 ends the reservation tendency obtainment process.

The first tolerance obtainment process will be described next.

During the first tolerance obtainment process, a survey is conducted on the user, and the attribute information stored in user management database 391 is updated based on a result of this survey.

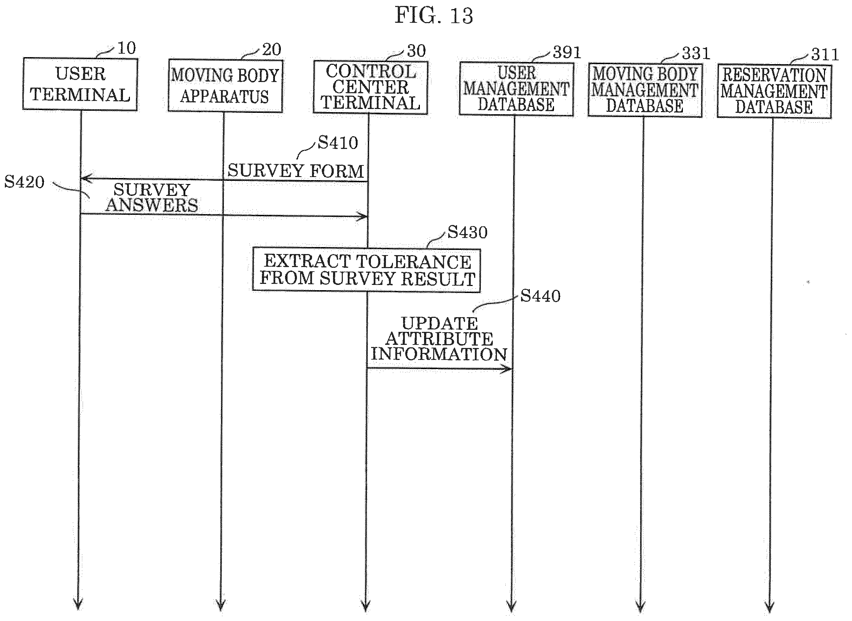

FIG. 13 is a sequence diagram of the first tolerance obtainment process.

The first tolerance obtainment process is performed repeatedly as needed during the operation of information presentation system 1. The first tolerance obtainment process may be conducted on the target user, for example, at a specified time after usage of the moving body (e.g. 6 p.m. on following day after usage) when the user has used the moving body.

Upon starting the first tolerance obtainment process, control center terminal 30 transmits, to user terminal 10 of the target user, a survey form including questions about the user tolerance toward the internal space of the moving body (step S410).

User terminal 10, having received the survey form, receives the answers of the user to this survey form, and transmits the received survey answers to control center terminal 30 (step S420).

Upon receiving the survey answers, control center terminal 30 extracts the user tolerance concerning the internal space of the moving body from the received survey answers (step S430), and updates the attribute information stored in user management database 391 by updating tolerance 1240 with the extracted tolerance (step S440).

The second tolerance obtainment process will be described next.

During the second tolerance obtainment process, the attribute information stored in user management database 391 is updated based on the record information stored in reservation management database 311. The second tolerance obtainment process is partially altered from the reservation tendency obtainment process.

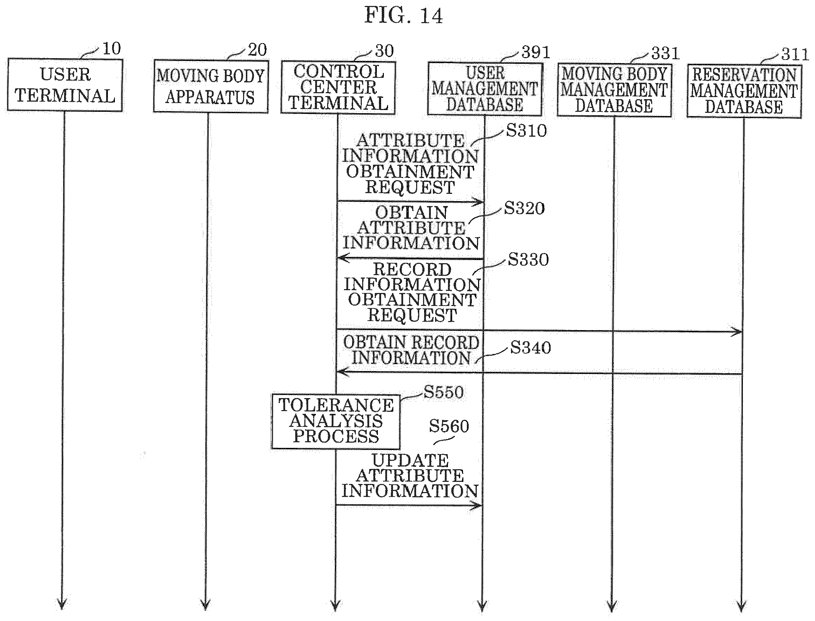

FIG. 14 is a sequence diagram of the second tolerance obtainment process.

As illustrated in FIG. 14, in the second tolerance obtainment process, the process of step S350 in the reservation tendency obtainment process (see FIG. 10) is changed to the process of step S550, and the process of step S360 in the reservation tendency obtainment process is changed to the process of step S560.

Accordingly, the differences with the reservation tendency obtainment process, the process of step S550 and the process of step S560, will mainly be described.

Upon ending the process of step S340, user information analyzer 360 starts the tolerance analysis process (step S550).

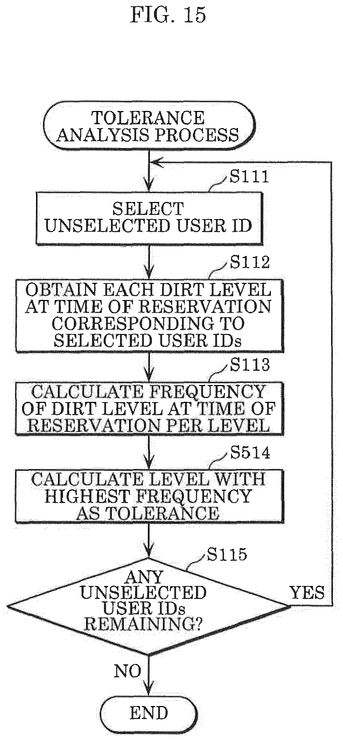

FIG. 15 is a flowchart of the tolerance analysis process.

As illustrated in FIG. 15, in the tolerance analysis process, the process of step S114 in the reservation tendency analysis process (see FIG. 11) is changed to the process of step S514.

Accordingly, the difference with the reservation tendency analysis process, the process of step S514, will mainly be described.

Upon ending the process of step S113, user information analyzer 360 calculates the level with the highest frequency as the user tolerance toward the internal space of the moving body (step S514).

Returning to FIG. 14, the second tolerance obtainment process will be further described.

Upon ending the process of step S550, user information analyzer 360 updates the attribute information stored in user management database 391 by updating tolerance 1240 with the calculated tolerance (step S560).

Upon ending the process of step S560, information presentation system 1 ends the second tolerance obtainment process.

The presentation process will be described next.

In the presentation process, when the user wishes to use the moving body, presentation information is generated based on the attribute information stored in user management database 391, and the generated presentation information is presented to the user.

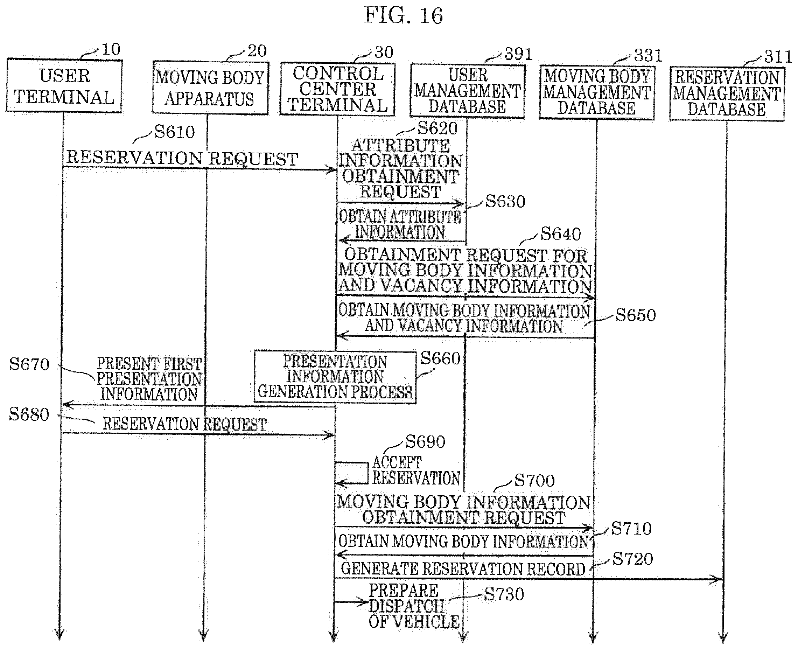

FIG. 16 is a sequence diagram of the presentation process.

The presentation process starts when user terminal 10 receives a reservation request from the user wishing to use the moving body and to make a reservation to use the moving body.

User terminal 10, having received the reservation request, transmits the received reservation request to control center terminal 30 (step S610).

Upon receiving the reservation request, presentation information generator 380 outputs an attribute information obtainment request to user management database 391 (step S620), and obtains the attribute information stored in user management database 391 (step S630). Presentation information generator 380 outputs an obtainment request for the moving body information and the vacancy information to moving body management database 331 (step S640), and obtains the moving body information and the vacancy information stored in moving body management database 331 (step S650).

Upon obtaining the attribute information, the moving body information, and the vacancy information, presentation information generator 380 starts the presentation information generation process (step S660).

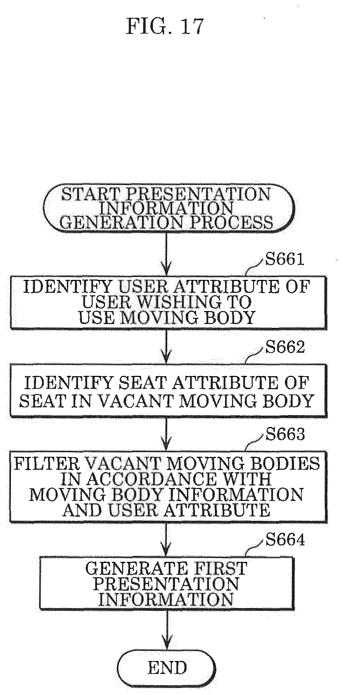

FIG. 17 is a flowchart of the presentation information generation process.

Upon starting the presentation information generation process, presentation information generator 380 designates an attribute of the user wishing to use the moving body based on the obtained attribute information (step S661). More specifically, presentation information generator 380, for example, designates reservation tendency analysis result 1220 and tolerance 1240 corresponding to user ID 1210, which identifies the user wishing to use the moving body, as the user attribute of the user wishing to use the moving body.

Upon designating the user attribute, presentation information generator 380 designates a seat attribute of a seat in a vacant moving body based on the obtained moving body information and the vacancy information (step S662). More specifically, presentation information generator 380, for example, designates dirt level 1030 corresponding to seat 1020, which designates vacant seats, as the seat attribute of the seat in the vacant moving body.

Upon designating the user attribute and the seat attribute, presentation information generator 380 filters the vacant moving bodies in accordance with the designated user attribute and the designated seat attribute (step S663), and generates the first presentation information pertaining to the state of the internal space of the moving body, i.e., the at least one of the vacant moving body and the vacant seats (step S664). Upon generating the first presentation information, presentation information generator 380 ends the presentation information generation process.

During the process of step S664, presentation information generator 380 may, for example, generate the first presentation information that corresponds to a relationship between the seat attribute and the user attribute. Presentation information generator 380 may, for example, determine whether it is possible to make at least one reservation for the at least one of the vacant moving body and the vacant seats in accordance with the relationship between the seat attribute and the user attribute. Presentation information generator 380 may, for example, determine at least one degree of the state of the internal space of the moving body, to be presented, of the at least one of the vacant moving body and the vacant seats in accordance with the relationship between the seat attribute and the user attribute; and generate the first presentation information that indicates each of the at least one degree of the state, to be presented, determined. Presentation information generator 380 may, for example, mitigate the at least one degree of the state of the internal space of the moving body, to be presented, as the user tolerance toward the state of the internal of the moving body is higher. Presentation information generator 380 may, for example, determine at least one price, to be presented, pertaining to a usage of the at least one of the vacant moving body and the vacant seats in accordance with the relationship between the seat attribute and the user attribute; and generate the first presentation information that indicates each of the at least one price, to be presented, determined. Presentation information generator 380 may, for example, reduce the at least one price, to be presented, as the user tolerance toward the state of the internal space of the moving body is higher. Presentation information generator 380 may, for example, determine at least one recommendation degree to a user of the at least one of the vacant moving body and the vacant seats in accordance with the relationship between the seat attribute and the user attribute; and generate the first presentation information that indicates each of the at least one recommendation degree determined.

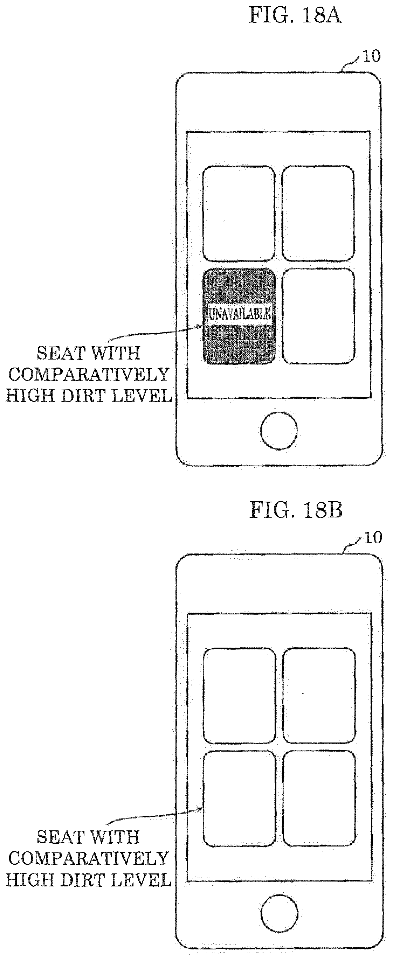

FIG. 18A, FIG. 18B, FIG. 19A, FIG. 19B, FIG. 20A, FIG. 20B, FIG. 21A, FIG. 21B, FIG. 22A, and FIG. 22B are schematic views showing an example of the first presentation information generated by presentation information generator 380 being presented by presenter 120.

FIG. 18A is a schematic view showing an example of the first presentation information presented by presenter 120, the first presentation information being generated for users with a comparatively low tolerance toward dirt on or damage to the moving body of the seats in the moving body, or to be specific, for example, users with a comparatively low tolerance 1240 or a comparatively low reservation tendency analysis result 1220. FIG. 18B is a schematic view showing an example of the first presentation information presented by presenter 120, the first presentation information being generated for users with a comparatively high tolerance toward dirt on or damage to the moving body of the seats in the moving body, or to be specific, for example, users with a comparatively high tolerance 1240 or a comparatively high reservation tendency analysis result 1220.

As illustrated in FIGs. 18A and 18B, presentation information generator 380 may, for example, change a threshold value for determining whether the moving body or the seats in the moving body are available or not in accordance with the tolerance toward dirt on or damage to the moving body of the seats in the moving body, and generate the first presentation information per user.

Presentation information generator 380 may, for example, generate the first presentation information so that users with a comparatively low tolerance toward dirt on or damage to the moving body of the seats in the moving body can identify seats with a comparatively high dirt level in accordance with a purchase amount or a usage rate of the user. In other words, presentation information generator 380 may, for example, generate the first presentation information so that a user without any purchases or a low usage rate cannot identify seats with a comparatively high dirt level, generate the first presentation information so that a user with a low purchase amount or a medium usage rate can identify seats with a comparatively high dirt level, and generate the first presentation information so that a user with a high purchase amount or a high usage rate can identify seats with a comparatively high dirt level in more detail.

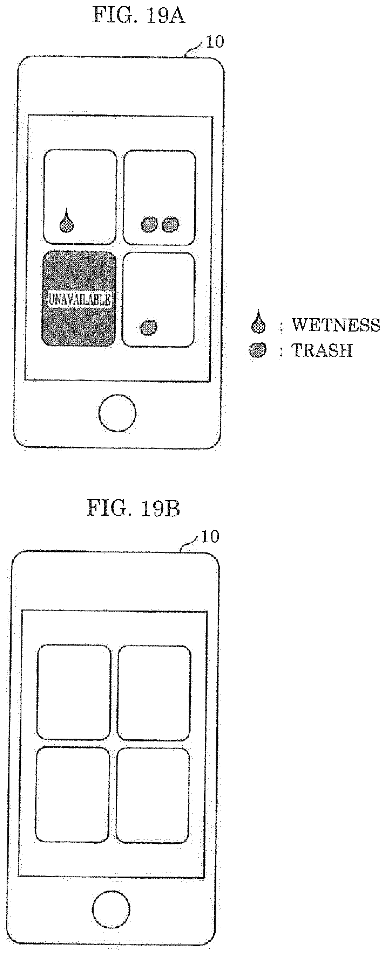

FIG. 19A is a schematic view showing an example of the first presentation information presented by presenter 120, the first presentation information being generated for users with a comparatively low tolerance toward dirt on or damage to the moving body of the seats in the moving body. FIG. 19B is a schematic view showing an example of the first presentation information presented by presenter 120, the first presentation information being generated for users with a comparatively high tolerance toward dirt on or damage to the moving body of the seats in the moving body.

As illustrated in FIGs. 19A and 19B, presentation information generator 380 may, for example, change a degree to be presented of the state of the internal space of the moving body in accordance with the tolerance toward dirt on or damage to the moving body of the seats in the moving body, and generate the first presentation information per user. Changing the degree is not only simply changing a degree to be presented, but also displaying that there is no problem or not presenting anything.

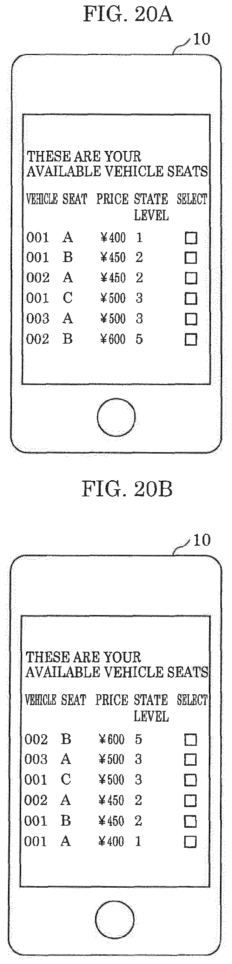

FIG. 20A is a schematic view showing an example of the first presentation information presented by presenter 120, the first presentation information being generated for users with a comparatively low tolerance toward dirt on or damage to the moving body of the seats in the moving body. FIG. 20B is a schematic view showing an example of the first presentation information presented by presenter 120, the first presentation information being generated for users with a comparatively high tolerance toward dirt on or damage to the moving body of the seats in the moving body.

As illustrated in FIGs. 20A and 20B, presentation information generator 380 may, for example, generate the first presentation information so that seats suited to the user attribute are presented on the top part of the screen per user.

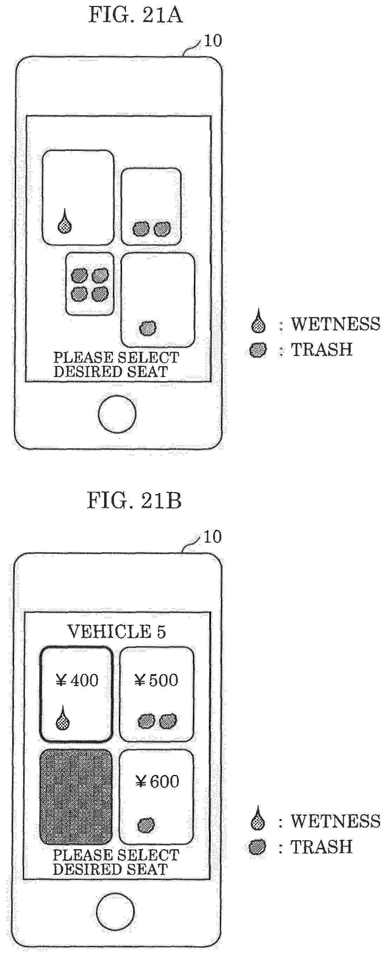

FIG. 21A is a schematic view showing an example of the first presentation information presented by presenter 120, the first presentation information being generated for users with a comparatively low tolerance toward dirt on or damage to the moving body of the seats in the moving body. FIG. 21B is a schematic view showing an example of the first presentation information presented by presenter 120, the first presentation information being generated for users with a comparatively high tolerance toward dirt on or damage to the moving body of the seats in the moving body.

As illustrated in FIGs. 21A and 21B, presentation information generator 380 may, for example, generate the first presentation information so that recommended seats are emphasized per user in accordance with the tolerance toward dirt on or damage to the moving body of the seats in the moving body.

FIG. 21A is a schematic view showing an example of the first presentation information presented by presenter 120, the first presentation information being generated for users with a comparatively low tolerance toward dirt on or damage to the moving body of the seats in the moving body. FIG. 21B is a schematic view showing an example of the first presentation information presented by presenter 120, the first presentation information being generated for users with a comparatively high tolerance toward dirt on or damage to the moving body of the seats in the moving body.

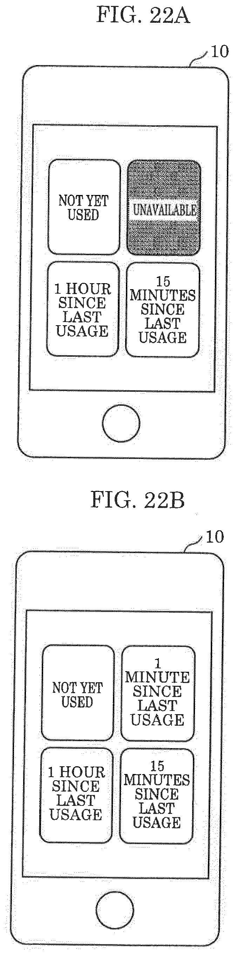

As illustrated in FIGs. 22A and 22B, presentation information generator 380 may change a threshold value for determining whether the moving body or the seats in the moving body are available or not in accordance with the tolerance toward a level of cleanliness of the moving body of the seats in the moving body, and generate the first presentation information per user.

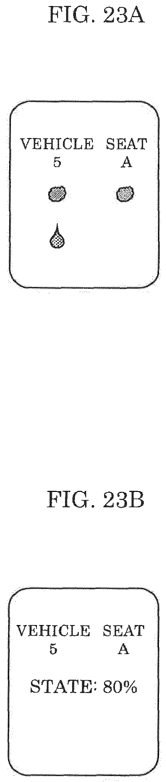

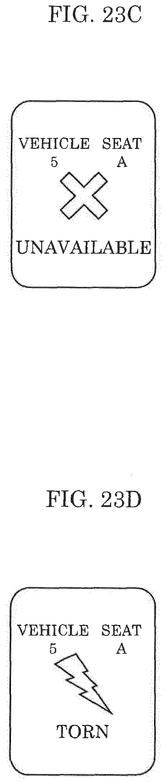

FIG. 23A, FIG. 23B, FIG. 23C, and FIG. 23D are schematic views showing an example of a presentation method of the target seat for the first presentation information generated by presentation information generator 380.

As illustrated in FIG. 23A, presentation information generator 380 may, for example, generate the first presentation information so that icons that indicate the dirt degree of the target seat is shown along with information that identifies the target seat.

As illustrated in FIG. 23B, presentation information generator 380 may, for example, generate the first presentation information so that icons that indicate the dirt degree of the target seat is shown along with information that identifies the target seat.

As illustrated in FIG. 23C, presentation information generator 380 may, for example, generate the first presentation information so that an icon is displayed that indicates that the seat is unavailable along with the information that identifies the target seat when the target seat is unavailable.

As illustrated in FIG. 23D, presentation information generator 380 may, for example, generate the first presentation information so that an icon is displayed that indicates the target seats is torn along with information that identifies the target seat when the target seat is torn.

Returning to FIG. 16, the presentation process will be further described.

Upon ending the process of step S660, presentation information generator 380 transmits the first presentation information to user terminal 10 of the user wishing to use the moving body, and causes presenter 120 to present the first presentation information (step S670).

Upon causing presenter 120 to present the first presentation information, the user wishing to use the moving body determines which moving body or seat in the moving body to reserve while considering the state of the internal space of the vacant moving body by checking the contents of the first presentation information presented by presenter 120.

Upon receiving a reservation request that indicates the contents of the reservation to use moving body in accordance with the first presentation information from the user wishing to use the moving body, user terminal 10, having presented the first presentation information, transmits the reservation request to control center terminal 30 (step S680).

Upon receiving the reservation request, control center terminal 30 accepts the received reservation request to use the moving body (step S690).

Upon accepting the reservation to use the moving body, presentation information generator 380 outputs a moving body information obtainment request to moving body management database 331 (step S700), and obtains the moving body information stored in moving body management database 331 (step S710).

Upon obtaining the moving body information, presentation information generator 380 updates the record information corresponding to seat 1020 in the target moving body and stored in reservation management database 311 by updating dirt level at time of reservation 1140 with dirt level 1030 (step S720).

Upon updating the record information, control center terminal 30 prepares dispatch of the reserved moving body (step S730).

Upon ending the process of step S730, information presentation system 1 ends the presentation process.

### 3. Consideration

As described above, with information presentation system 1, when the user wishing to use the moving body inputs a reservation request for using the moving body to user terminal 10, the first presentation information concerning the state of the internal space of the vacant moving body is presented on user terminal 10. Accordingly, the user wishing to use the moving body can determine which moving body or seat in the moving body to reserve while considering the state of the internal space of the vacant moving body.

In this manner, information presentation system 1 enables the user wishing to use the moving body to acquire information relating to the internal state of the moving body before the moving body is provided.

### OTHER EMBODIMENTS

An information presentation system according to one or more aspects of the present disclosure has been described above based on the embodiment, but the present disclosure is not limited to the foregoing. Forms obtained by various combinations of the components in the different embodiments that can be conceived by a person skilled in the art which are within the scope of the essence of the present disclosure may also be included in the scope of the one or more aspects of the present disclosure.
1) In the embodiment, information presentation system 1 has been described as including user terminal 10, moving body apparatus 20, and control center terminal 30. However, the functionality realized by control center terminal 30 does not necessarily need to be realized by one apparatus and may also be realized by a plurality of mutually communicable apparatuses.

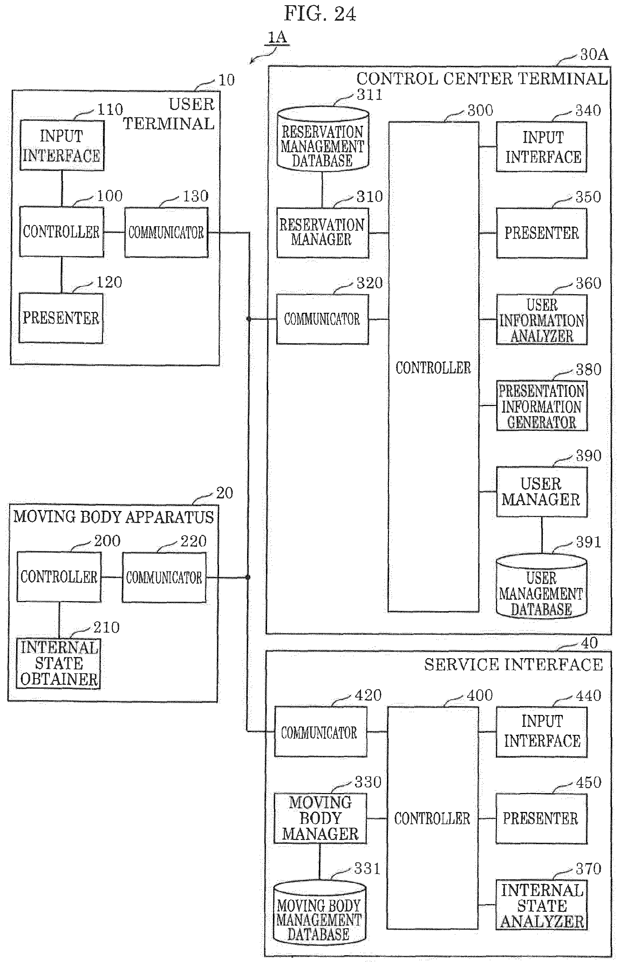

   FIG. 24 is a block diagram showing a configuration of information presentation system 1A according to another embodiment.
   As illustrated in FIG. 24, information presentation system 1A includes, in addition to user terminal 10 according to the embodiment and moving body apparatus 20 according to the embodiment, control center terminal 30A partially changed from control center terminal 30 according to the embodiment, and servicer terminal 40.
   Control center terminal 30A differs from control center terminal 30 according to the embodiment in that moving body manager 330, moving body management database 331, and internal state analyzer 370 have been removed therefrom. Control center terminal 30A is, for example, used by an operator operating information presentation system 1. Control center terminal 30A, may, for example, be a computer.
   Servicer terminal 40 includes moving body manager 330, moving body management database 331, and internal state analyzer 370 removed from control center terminal 30 according to the embodiment. Servicer terminal 40 is, for example, used by a servicer that provides the moving body including moving body apparatus 20. Servicer terminal 40, may, for example, be a computer.
   Control center terminal 30A and servicer terminal 40 with the above configuration realize the same functionality as control center terminal 30 according to the embodiment by operating in coordination with each other while communicating. This enables information presentation system 1A to realize the same functionality as information presentation system 1 according to the embodiment.
   The functionality realized by control center terminal 30 may, for example, be realized by distributed computing or cloud computing.
2) In the embodiment, presentation information generator 380 has been described as generating the first presentation information and causing the presentation apparatus to present the generated first presentation information. In contrast, presentation information generator 380 may further (i) generate second presentation information for determining whether it is possible to reserve the at least one of the vacant moving body and vacant seats in the moving body in accordance with the relationship between the seat attribute and the user attribute, and (ii) cause the presentation apparatus to present the generated second presentation information.

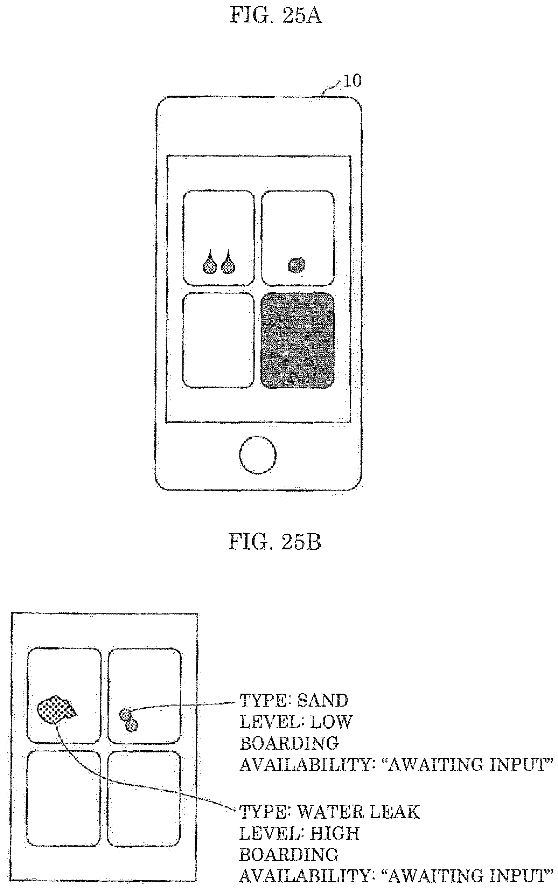

   FIG. 25A is a schematic view showing an example of the first presentation information being presented by presenter 120 of user terminal 10, the first presentation information being generated by presentation information generator 380 for users wishing to use the moving body. FIG. 25B is a schematic view showing an example of the second presentation information being presented by presenter 450 of servicer terminal 40, the second presentation information being generated by presentation information generator 380 for servicers providing the moving body that includes moving body apparatus 20.
   The servicer that uses servicer terminal 40 can determine whether it is possible to make a reservation for the at least one of the vacant moving body and the vacant seats in the moving body, i.e., determine whether to make the at least one of the vacant moving body and the vacant seats in the moving body targets for the reservation based on the second presentation information to be presented.
   In order for the servicer to determine whether it is possible to make a reservation for the at least one of the vacant moving body and the vacant seats in the moving body, the second presentation information for servicers may, for example, indicate the state of the internal space of the moving body in more detail than the first presentation information for users wishing to use the moving body, as illustrated in FIGs. 25A and 25B. The second presentation information may, for example, include the state information (e.g. captured image when the state information is a captured image of the seats), and the second presentation information may also be the state information itself.
   Presentation information generator 380 may further generate the first presentation information that reflects the determination result determined by presenting the second presentation information, and cause the presentation apparatus to present the generated first presentation information.
3) In the embodiment, presentation information generator 380 is described as generating the first presentation information and causing the presentation apparatus to present the generated first presentation information. In contrast, presentation information generator 380 may further determine a gain or a loss for the user based on a change in the state of the internal space of the moving body before and after a usage by the user when the user has finished using the moving body; and cause the presentation apparatus to present the gain or the loss determined. Note that the gain may be benefits to make the user more willing to use the service, e.g. price reduction of next usage, awarding points, or giving presents.

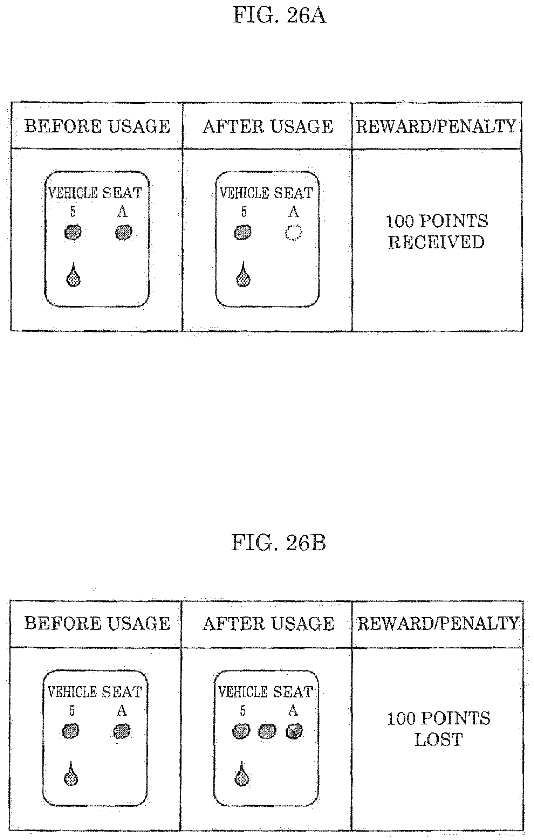

   FIGs. 26A and 26B are schematic views showing an example of the gain or loss given to the user being presented on user terminal 10 of the user that has finished using the moving body.
   As illustrated in FIGs. 26A and 26B, presentation information generator 380 may cause (i) information that indicates the state of the internal space of the moving body immediately before usage of the moving body and (ii) information that indicates the state of the internal space of the moving body immediately after usage of the moving body to be presented in parallel with the determined gain or loss.
   As exemplified in FIG. 26A, presentation information generator 380 may, for example, determine the gain or loss so that the user receives a benefit when the state of the internal space of the moving body immediately before usage of the moving body is worse than the state of the internal space of the moving body immediately after usage of the moving body. As exemplified in FIG. 26B, presentation information generator 380 may also, for example, determine the gain or loss so that the user receives a penalty when the state of the internal space of the moving body immediately after usage of the moving body is worse than the state of the internal space of the moving body immediately before usage of the moving body.
4) In the embodiment, the first presentation information being presented on the presentation apparatus has been illustrated and described per vacant moving body with reference to FIG. 18A, FIG. 18B, FIG. 19A, FIG. 19B, FIG. 20A, FIG. 20B, FIG. 21A, FIG. 21B, FIG. 22A, and FIG. 22B. Presentation information generator 380 does not, however, necessarily need to cause the presentation apparatus to present the first presentation information per vacant moving body. For example, presentation information generator 380 may also cause the presentation apparatus to present the first presentation information per vacant seat.
5) A part or an entirety of the components included in control center terminal 30, user terminal 10, or moving body apparatus 20 may be one system large-scale integrated (LSI) circuit. System LSI is a multifunctional LSI in which a plurality of components are laminated on one chip, more specifically, is a computer system including a microprocessor, read-only memory (ROM), random access memory (RAM), and the like. A computer program is stored in the ROM. The microprocessor operates in accordance with the computer program, and the system LSI realizes this functionality.
   Note that the system LSI may also refer to integrated circuit (IC), LSI, super LSI, or ultra LSI depending on degree of integration. The means for realizing the IC is not limited to LSI, but may also be realized by a dedicated circuit or a general-purpose processor. After manufacturing the LSI, a field-programmable gate array (FPGA) that can be programmed or a reconfigurable processor whose settings and connections of circuit cells in the LSI can be reconfigured may also be used.
   Furthermore, when new technologies replacing LSI are introduced due to the advancement of semiconductor technology, these techniques may naturally also be used to integrate the function blocks. The present disclosure can possible also be used in biotechnology and the like.
6) An aspect of the present disclosure is not only such an information presentation system, but may also be an information processing method which turns the characteristic components included in the information presentation system into steps. An aspect of the present disclosure may be a computer program that causes a computer to execute each of the characteristic steps included in the information processing method. An aspect of the present disclosure may be a computer-readable, non-transitory recording medium containing such a computer program.
7) In the embodiment, each component may be realized by being dedicated hardware or being executed by a software program suited to each component. Each component may also be realized by a program executor, e.g. a central processing unit (CPU) or a processor reading and executing a software program stored on a recording medium, e.g. a hard disk, semiconductor memory, or the like.
8) In the embodiment, control center terminal 30, having received the reservation request, may prepare the steps up to the dispatching of the moving body automatically based on the attribute information stored in user management database 391, and generate presentation information that indicates that the moving body has been dispatched.

Note that the processes performed by user information analyzer 360 and internal state analyzer 370 may also employ machine learning. Examples of machine learning include, for example, supervised learning in which a relationship between input and output is trained using labeled (output information) training data with respect to input information, unsupervised learning in which data structures are built from only unlabeled input, semi-supervised learning in which both labeled and unlabeled data are handled, and reinforcement learning in which successive actions are learned to maximize rewards by obtaining feedback (rewards) with respect to actions that are selected from state observation results. As a specific means of machine learning, there is the neural network (including deep learning using multi-layered neural networks), genetic programming, decisions trees, Beyasian network, support vector machine, and the like. In the present disclosure, any of the above specific examples may be used.

Although the present disclosure has been described and illustrated in detail, it is clearly understood that the same is by way of example only and is not to be taken by way of limitation, the scope of the present disclosure being limited only by the terms of the appended claims.

### INDUSTRIAL APPLICABILITY

The present disclosure can be widely used in a system employing moving bodies.

### REFERENCE SIGNS LIST

- 1, 1A: Information processing system
- 10: User terminal
- 20: Moving body apparatus
- 30, 30A: Control center terminal
- 40: Servicer terminal
- 100, 200, 300, 400: Controller
- 110, 340, 440: Input interface
- 120, 350, 450: Presenter
- 130, 220, 320, 420: Communicator
- 210: Internal state obtainer
- 310: Reservation manager
- 311: Reservation management database
- 330: Moving body manager
- 331: Moving body management database
- 360: User information analyzer
- 370: Internal state analyzer
- 380: Presentation information generator
- 390: User manager
- 391: User management database

## Claims

1. An information processing method, comprising the following executed by a computer:
obtaining (i) state information that indicates a state of an internal space of at least one moving body and is detected from a sensing result of the internal space and (ii) vacancy information about the at least one moving body;
generating first presentation information pertaining to the state of at least one of a vacant moving body and vacant seats among the at least one moving body using the state information and the vacancy information; and
causing a presentation apparatus to present the first presentation information.

2. The information processing method according to claim 1, comprising:
obtaining attribute information that indicates a user attribute concerning an internal space of a moving body; and
generating the first presentation information that corresponds to a relationship between the state and the user attribute and indicates the state of the at least one of the vacant moving body and the vacant seats, further using the attribute information.

3. The information processing method according to claim 2, comprising:
determining whether it is possible to make at least one reservation for the at least one of the vacant moving body and the vacant seats in accordance with the relationship between the state and the user attribute; and
generating the first presentation information that indicates whether each of the at least one reservation can be made.

4. The information processing method according to claim 2 or 3, comprising:
determining at least one degree of the state, to be presented, of the at least one of the vacant moving body and the vacant seats in accordance with the relationship between the state and the user attribute; and
generating the first presentation information that indicates each of the at least one degree of the state, to be presented, determined.

5. The information processing method according to claim 4, wherein
the user attribute includes a user tolerance toward the state, and
the method comprises mitigating the at least one degree of the state, to be presented, as the user tolerance toward the state is higher.

6. The information processing method according to any one of claims 2 to 5, comprising:
determining at least one price, to be presented, pertaining to a usage of the at least one of the vacant moving body and the vacant seats in accordance with the relationship between the state and the user attribute; and
generating the first presentation information that indicates each of the at least one price, to be presented, determined.

7. The information processing method according to claim 6, wherein
the user attribute includes the user tolerance toward the state, and
the method comprises reducing the at least one price, to be presented, as the user tolerance toward the state is higher.

8. The information processing method according to any one of claims 2 to 5, comprising:
determining at least one recommendation degree to a user of the at least one of the vacant moving body and the vacant seats in accordance with the relationship between the state and the user attribute; and
generating the first presentation information that indicates each of the at least one recommendation degree determined.

9. The information processing method according to any one of claims 2 to 8, comprising:
causing the presentation apparatus to present the first presentation information for each of the vacant seats.

10. The information processing method according to any one of claims 2 to 9, comprising:
generating the attribute information from a usage history of the at least one moving body by the user.

11. The information processing method according to claim 10, comprising:
generating the attribute information from the state of the at least one moving body before and after a usage by the user.

12. The information processing method according to any one of claims 2 to 11, comprising:
determining a gain or a loss for the user based on the state of the at least one moving body before and after the usage by the user; and
causing the presentation apparatus to present the gain or the loss determined.

13. The information processing method according to any one of claims 1 to 12, comprising:
obtaining the attribute information that indicates the user attribute concerning the internal space of the moving body;
generating second presentation information for determining whether the at least one of the vacant moving body and the vacant seats can be reserved in accordance with the relationship between the state and the user attribute further using the attribute information; and
causing the presentation apparatus to present the second presentation information.

14. The information processing method according to claim 13, comprising:
causing the presentation apparatus to present the first presentation information in which a determination result determined by presenting the second presentation information is reflected.

15. The information processing method according to claim 13 or 14, wherein
the second presentation information is the state information.

16. The information processing method according to any one of claims 1 to 15, wherein
the state is a state of dirt on or damage to seats of the at least one moving body, or an odor in the internal space of the at least one moving body.
